# EUROPÄISCHE PATENTSCHRIFT

(11) **EP 0 980 805 B1**
(45) Veröffentlichungstag und Bekanntmachung des Hinweises auf die Patenterteilung: **11.02.2009**
(21) Anmeldenummer: 99115722.3
(22) Anmeldetag: 10.08.1999
(51) Int. Cl.: B60T 8/17

(54) **Passiver GMR-Sensor für Antiblockierbremssysteme**
Passive GMR-sensor for anti-lock braking systems
Capteur-GMR passif pour des systèmes antiblocage

(30) Priorität: 20.08.1998 US 137216
(43) Veröffentlichungstag der Anmeldung: 23.02.2000
(73) Patentinhaber: Continental Automotive GmbH, 30165 Hannover (DE)
(72) Erfinder: Bossoli, Jon W., Cheshire, CT 06410 (US); Hunt, Raymond L., Fort Wayne, IN 46815 (US)

(56) Entgegenhaltungen:
- DE-A- 4 406 351
- DE-A- 19 630 108
- DE-A- 19 634 714
- US-A- 5 084 674

## Beschreibung

Die vorliegende Erfindung betrifft allgemein einen passiven magnetoresistiven (MR) Sensor für die Raddrehzahl und insbesondere einen GMR-Sensor (giant magnetoresistive) für Antiblockierbremssysteme.

Bereits im Stand der Technik vorhandene Raddrehzahlsensoren sind aus DE 19630108, US 5084674, DE 4406351 und DE 19634714 bekannt.

Im Bereich von Bremsscheiben und Bremsbelägen von Fahrzeugen können die typischen Temperaturen kurzzeitig bis auf 650°F (343°C) ansteigen. Der tatsächliche hohe Temperaturgradient im Bereich der Bremse ist für jedes Fahrzeug verschieden. Die hohen Temperaturen schließen aus, daß in diesem Bereich Raddrehzahlsensoren mit aktiven integrierten Schaltungen auf Siliziumbasis oder ein mit Lack beschichteter Magnetdraht angebracht wird.

Der Mangel an Temperaturunempfindlichkeit bei gegenwärtigen, für Antiblockierbremssysteme verwendeten Produkten erfordert die Konstruktion separater Zahnräder und von den hitzeproduzierenden Bauteilen der Bremse beabstandete Montageklammern, was die Kosten des Bremssysterns erhöht. Dieser Abstand variiert je nach der Auslegung jedes Bremssystems erheblich.

Antiblockierbrems-Raddrehzahlsensoren verwenden gegenwärtig einen veränderlichen magnetischen Widerstand, induktive und Hall-Technologie oder MR-Technologie mit einer aktiven Signataufbereitungsschaltung, die in der Instrumententafel des Fahrzeugs angeordnet ist, weit weg von der heißen Umgebung in der Nähe der Bremsscheibe eines Rads. Diese Sensoren sind im allgemeinen als Zweileitersensoren konfiguriert, die als Stromschleifensteuereinrichtungen arbeiten. Zu diesen Sensortechniken gehört, daß die aktive Signalaufbereitungsschaltung in einer zweiten gepackten Einrichtung angeordnet wird, die sich in einiger Entfernung von dem heißen Gebiet der Bremse befindet und über eine Leiterrahmenbaugruppe an ein MR-Sensorelement angeschlossen ist. Die aktive Signalaufbereitungsschaltung verstärkt das MR-Sensorsignal bzw. bei Verwendung von Hall-Sensoren ein Hall-Sensorsignal. Dieser Weg ist auch teuer. Die aktive Signalaufbereitungsschaltung enthält eine Signalverstärkungsschaltung, um die Signalamplitude wiederherzustellen, die durch eine lange elektrische Zuleitung, die durch die Anordnung der Aufbereitungsschaltung in einiger Entfernung von dem MR-Sensor erforderlich ist, verlorengegangen ist. Ohne die Verstärkung würde die Signalstärke zu gering sein und ein Signal-Rausch-Verhältnis aufweisen, das zu klein ist, um nützlich zu sein.

In dem Stand der Technik ist ein integrierter Drehzahlsensor bekannt, der die Drehzahl von aus Eisen bestehenden Zahnrädern und Bezugsmarkierungen erfaßt. Der Sensor besteht aus einem MR-Sensorelement, einer integrierten Signalaufbereitungsschaltung (IC) in Bipolartechnologie und einem Magnet aus magnetisiertem Ferrit. Die Frequenz des digitalen Stromausgangssignals ist proportional zu der Drehzahl eines Zahnrads, das mit dem sich drehenden Element verbunden ist, dessen Drehzahl gemessen werden soll. Der Sensor ist für die Bewegung von aus Eisen bestehenden Zahnrädern bzw. Bezugsmarkierungen empfindlich. Durch Veränderungen in der Magnetfeldstärke, die durch die Bewegung der Zähne hervorgerufen werden, und die sich krümmenden Flußlinien des Magnetflußwegs liefert die sich verändernde Amplitude von Magnetfeldlinien in dem magnetoresistiven Sensorelement ein elektrisches Signal. Durch die gewählte Sensororientierung und die Richtung der Ferritmagnetisierung ist der Sensor für Bewegung in nur einer Richtung vor dem Sensor empfindlich.

Das Signal des magnetoresistiven Sensorelements wird von einem zusammen mit dem Sensorelement in dem gleichen Sensorelementgehäuse angeordneten Verstärker verstärkt, um das Aufnehmen von Hochfrequenzrauschen auf den Verbindungskabeln zu vermeiden und auf diese Weise ein Sensorsignal mit starker Amplitude und gutem Signal-Rausch-Verhältnis an die weitere Signalverarbeitungsschaltung abzugeben, die sich in einer Entfernung zu dem Sensorelementgehäuse befindet. Um die aktive Schaltung des Verstärkers vor der durch das Bremsen erzeugten starken Hitze zu schützen, sorgt das obengenannte Zahnrad für eine unnötig komplizierte mechanische Struktur, die dazu dient, das Sensorelementgehäuse von dem Gebiet starker Hitze zu beabstanden. Eine geeignete Verkabelung erstreckt sich zwischen dem Sensorelementgehäuse und der weiteren Signalverarbeitungsschaltung.

Bei den weiteren Signalverarbeitungsschaltungen wird das Signal des Sensorelements hinsichtlich der Temperatur kompensiert und an einen Schmitt-Trigger in dem Aufbereitungs-IC angelegt, wie im folgenden beschrieben. Der Pegel des sich ergebenden digitalen Ausgangssignals liegt innerhalb des Meßbereichs. Ein Stromausgangssignal (2-Leiter-Ausgangssignal) der obigen Verkabelung ermöglicht einen sicheren Sensorsignaltransport von dem Erfassungselement zu der erfassenden und verarbeitenden Schaltung. Das IC-Gehäuse der erfassenden und signalverarbeitenden Schaltung ist zwecks Schutz vor hohen Temperaturen von dem Sensorelementgehäuse beabstandet, um auf diese Weise das Betriebsverhalten des Sensors bei hohen Temperaturen zu optimieren.

Eine Aufgabe der Erfindung besteht in der Bereitstellung eines verbesserten MR-Sensors, der in dem eine aggressive Temperatur aufweisenden Gebiet der Bremsscheiben und -beläge mit Genauigkeit und einem Minimum an Schaltung angeordnet werden kann.

Gemäß der Erfindung ist ein passiver GMR als Erfassungselement im Gebiet der Bremse vorgesehen, wobei die Signalverarbeitungsschaltung des Sensors zwecks Temperaturschutz in einer ausreichenden Entfernung von dem Erfassungselement angeordnet ist.

Die Verwendung eines passiven GMR-Elements, z.B. solche, die von der Firma Nonvolatile Electronics, Inc. (oder unter weiterer Entwicklung durch Philips Research) hergestellt werden, gestattet die Erzeugung eines Signals beim GMR-Element, das stark genug ist, über elektrische Leiter zu einer mehrere Fuß entfernten Bremssystemsteuerung übertragen zu werden, ohne daß die aktive Verstärkungsschaltung des Standes der Technik erforderlich wäre. Dadurch wird auch das Verhältnis aus Signalleistung zu der Leistung des elektrischen Rauschens, die in der Schaltung einer Radbremse insbesondere während des Reibens eines Bremsbelags an einer Bremsscheibe vorliegen kann, erhöht. Wenn das GMR-Element der vorliegenden Erfindung verwendet wird, entfällt ein Teil der Schaltung nach dem Stand der Technik, die Verstärker und andere Signalaufbereitungskomponenten des ABS-MR-Sensors nach dem Stand der Technik enthält. Dadurch kann das GMR-Element in Hochtemperaturbereichen allein existieren, die ansonsten die kosteneffektivsten Mittel zum Anbringen und Liefern modulierter Magnetfelder für diese Sensoren liefern.

Die Bremsscheibe eines Fahrzeugs umfaßt ein sich drehendes Rad mit großem Durchmesser, das oft mit Kühlschaufeln ausgestattet ist. Diese Schaufeln können von einem auf der Bremssattelbaugruppe angebrachten, entsprechend hitzebeständigen magnetischen GMR-Sensor der Erfindung erfaßt werden, oder die Scheibe kann an ihrem Umfang mit von dem GMR-Erfassungselement zu erfassenden Schlitzen versehen sein.

Die Erfindung liefert eine neuartige Anordnung von Komponenten innerhalb eines durch Parameter eines Temperaturprofils definierten Raums, wobei das Profil von der Wärmequelle aus verläuft, bei der es sich um die sich drehende Bremsscheibe handelt. Ein verallgemeinerter Temperaturgradient ist wie folgt: Die Temperatur an der Bremsscheibe kann 300°C und an der messenden gezahnten Scheibe 150°C betragen. Mit weiterer Entfernung von der Bremsscheibe fällt die Temperatur ab. Was die Komponenten in diesem Raum betrifft, so sind sie gemäß der vorliegenden Erfindung alle passive Komponenten und enthalten den GMR-Sensor.

Die Erfindung konfiguriert eine passive GMR-Anordnung, die in der Lage ist, eine ausreichende Signalstärke zu erzeugen, ohne daß eine aktive Signalaufbereitungselektronik des Standes der Technik erforderlich wäre, und doch kann der GMR in der gleichen Zweileiter-Stromsteuerschleifen-Konfiguration wie aktive Signalaufbereitungsschaltungssensoren arbeiten.

Ein GMR-Element mit einem GMR-Effekt von mindestens 6% bei 20°C wird sehr nahe an einem ABS-Zahnradziel oder einer anderen Form von Ziel wie beispielsweise einer Bremsscheibe mit Kühlschaufeln oder Ober-flächenwelligkeiten in der aggressiven Umgebung der Radbremse angeordnet und zur Erzeugung eines Magnetfelds durch einen Permanentmagneten rückbelastet. Die GMR-Anordnung liefert als Ausgangssignal ein starkes Signal. Eine zusätzliche Verstärkungsschaltung wird weder verwendet, noch ist sie erforderlich. Die GMR-Anordnung ist elektrisch über einen Reihenwiderstand an eine Gleichspannungsquelle im Bereich 5 - 24 V angeschlossen. Der Signalstrom der GMR-Anordnung erzeugt in dem Reihenwiderstand eine entsprechende Signalspannung zur Verwendung durch die Signalverarbeitungsschaltung.

Modulationen des Magnetfelds, die durch sich bewegende Zähne des Ziels oder durch andere Zielstörgrößen in der Scheibe einer Scheibenbremse hervorgerufen werden, bewirken eine Veränderung des Widerstands in dem GMR-Element, was zu einer Spannungsänderung über den festen Reihenwiderstand hinweg führt. Diese Spannungsänderung kann durch eine entsprechende Erfassungsschaltung erfaßt werden. Der Widerstand des GMR-Elements verändert seinen Wert in Abhängigkeit vom Magnetfeld, so daß eine Magnetfeldänderung ein moduliertes Signal bewirkt, aus dem die Drehzahl (Umdrehungen pro Minute) des Zahnrads erfaßt werden kann.

Der Vorteil der Schaltung der Erfindung gegenüber dem Stand der Technik liegt in der Tatsache, daß nur die passive GMR-Anordnung in der aggressiven Umgebung an der Bremse des Rads angeordnet sein muß. Andere Schaltungselemente sind entfernt davon angeordnet und über ein Paar elektrischer Leiter mit der GMR-Anordnung verbunden. Das Ausgangssignal des Sensors ist eine Strommodulation einer Konstantspannungsquelle. Dies führt im Gegensatz zu der herkömmlichen Dreiaderverbindung, die für aktive Nullgeschwindigkeitssensoren erforderlich sind, zu einer Zweiaderverbindung zu dem Sensor. Die Einsparung einer Zuleitung führt zu geringeren Kosten und höherer Zuverlässigkeit.

Der GMR kann selbst sein Ausgangskabel ansteuern, ohne daß ein Treiberverstärker erforderlich wäre. Mit der Erfindung kann der GMR direkt an Schaufeln von belüfteten Scheiben verwendet werden, anstatt eine gezähnte Scheibe zu erfordern.

Das passive GMR-Element und der Magnet können bei Temperaturen über 200°C arbeiten, weit jenseits der Grenze von aktiven Sensoren des Standes der Technik auf Siliziumbasis.

Das von dem Sensor der ABS-Steuerung zugeführte Signal ist demjenigen sehr ähnlich, was von herkömmlichen Sensoren vom Reluktanztyp erzeugt wird. Deshalb sind nur minimale Veränderungen an der Steuerungsschaltung erforderlich, um annähernd auf einen eigentlichen Nullgeschwindigkeits-GMR-Sensor zu erweitern.

Angesichts der obigen und weiteren Aufgaben und Vorteile läßt sich die vorliegende Erfindung im Zusammenhang mit der ausführlichen Beschreibung bevorzugter Ausführungsformen bei Betrachtung zusammen mit den beiliegenden Zeichnungen deutlicher verstehen. Es zeigen:
- Figur 1: eine Scheibenbremsvorrichtung nach dem Stand der Technik;
- Figur 2: eine Scheibenbremsvorrichtung mit einer GMR-Anordnung der Erfindung; und
- Figur 3: im Schnitt und teilweise schematisch einen geschlitzten Teil einer Bremsscheibe von Figur 2.

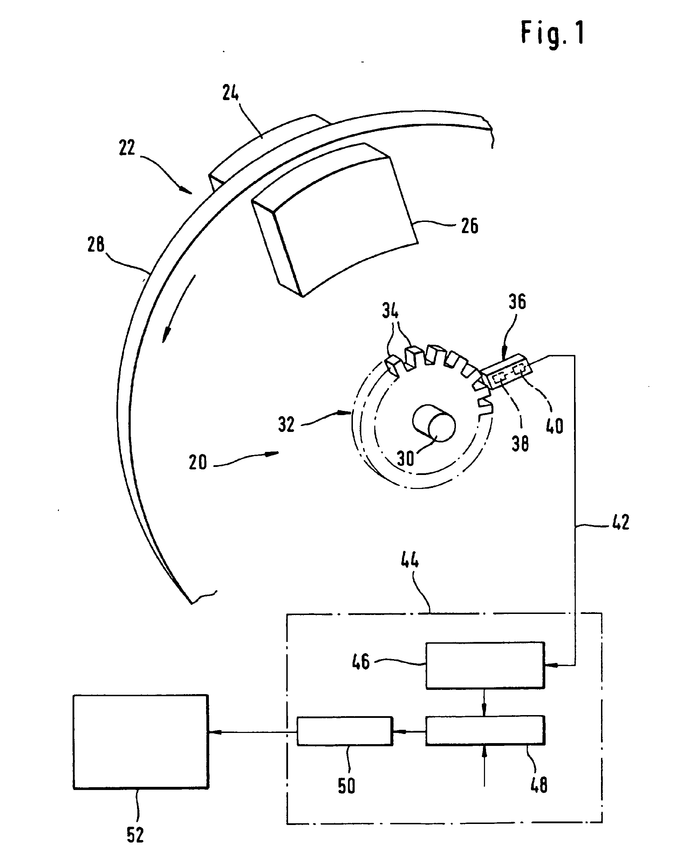

Figur 1 zeigt einen Raddrehzahlsensor 20 des Standes der Technik zur Verwendung mit einer Scheibenbremse 22 mit gegenüberliegenden Belägen 24, 26, die die Scheibe 28 der Bremse 22 ergreifen. Die Scheibe 28 ist koaxial zu einem nicht gezeigten Rad eines Fahrzeugs montiert, wobei die Scheibe 28 und das Rad sich auf einer Welle 30 zusammen drehen. Ein Zahnrad 32, das zur thermischen Isolierung von der starken Hitze der Bremse von der Scheibe 28 beabstandet sein kann, dreht sich ebenfalls auf der Welle 30 synchron mit der Scheibe 28. Das Zahnrad 32 kann auf geeignete Weise, wie beispielsweise durch nicht gezeigte Schrauben, an der Scheibe 28 gesichert sein, um sich synchron mit dieser zu drehen.

Das Zahnrad 32 weist Zähne 34 aus magnetischem Material auf, die einen Teil des Sensors 20 bilden. Die Zähne 34 sind mit gleichmäßigem Abstand um einen Umfang des Zahnrads 32 angebracht. Ein Erfassungselement 36 weist eine Anordnung von MR-Elementen 38 auf, die neben dem Umfang des Zahnrads 32 angeordnet sind, um bei Drehen des Zahnrads 32 erhaltene Schwankungen des Magnetfelds zu erfassen. Das Erfassungselement 36 wird von einer nicht gezeigten Halterung in Position gehalten. Bei Umwandlung von Magnetfeldstärke durch die MR-Elemente in einen Widerstandswert von den MR-Elementen 38 erzeugte elektrische Signale werden von einem innerhalb des Erfassungselements 36 angeordneten Verstärker 40 auf einen Wert verstärkt, der weit über dem elektrischen Rauschen liegt, das möglicherweise durch den Betrieb des Fahrzeugs induziert wird. Derartiges Rauschen kann beispielsweise von einem Reiben der Beläge 24, 26 an der Scheibe 28 resultieren.

Es wird angemerkt, daß derartiges elektrisches Rauschen von einem Leiterstück 42 aufgenommen werden kann, das das Erfassungselement 36 mit einem Signalprozessor 44 verbindet. Um ein annehmbares Signal-Rausch-Leistungsverhältnis (SNR) am Eingang zu dem Signalprozessor 44 sicherzustellen, befindet sich der Verstärker 40 dementsprechend angrenzend an die Anordnung von MR-Elementen 38. Dadurch gibt das Erfassungselement 36 an die Leitung 42 ein starkes, im wesentlichen rauschfreies Signal ab. Dadurch kann der Signalprozessor 44 sich in einer Entfernung zu dem Erfassungselement 36, beispielsweise mehrere Fuß entfernt, befinden, ohne mit einem niedrigen SNR behaftet zu sein.

Der Signalprozessor 44 umfaßt ein Rauschfilter 46, einen Komparator 48, der ein Ausgangssignal des Filters 46 mit einem Bezugssignal vergleicht, und einen Triggergenerator 50 wie beispielsweise einen Schmitt-Triggergenerator, der als Reaktion darauf, daß ein vorbestimmter Zustand der Komparatorausgangsspannung erreicht wurde, ein Triggersignal ausgibt. Das Triggersignal wird von dem Signalprozessor 44 an eine geeignete Nutzeinrichtung angelegt, wie beispielsweise an einen ABS-Rechner (Antiblockierbremssystem-Rechner) zur Steuerung des Bremssystems des Fahrzeugs. Die Verwendung der MR-Elemente 38 gestattet den Durchlaß von Signalen mit extrem niedriger Frequenz zur Überwachung von niedriger Drehzahl des Fahrzeugsrads sowie den Durchlaß von Signalen höherer Frequenz zur Überwachung einer hohen Drehzahl des Rads.

Ein Gesichtspunkt des Aufbaus von Figur 1 besteht darin, daß zwischen der Scheibe 28 und dem Erfassungselement 36 ausreichend Raum vorgesehen ist, so daß die Temperatur der Umgebung der Scheibe 28 und der Beläge 24, 26 in der Umgebung des Erfassungselements 36 wesentlich reduziert wird. Dies verhindert eine Zerstörung der aktiven Elemente, wie beispielsweise Transistoren, des Verstärkers 40 durch übermäßig hohe Temperaturen und liefert eine Umgebung, die einen korrekten Betrieb der Komponenten des Erfassungselements 36 sicherstellt. Der Raum zwischen der Scheibe 28 und dem Erfassungselement 36 wird durch die Verwendung des Zahnrads 32 erzielt, das durch die Welle 30 von der Scheibe 28 beabstandet gehalten wird.

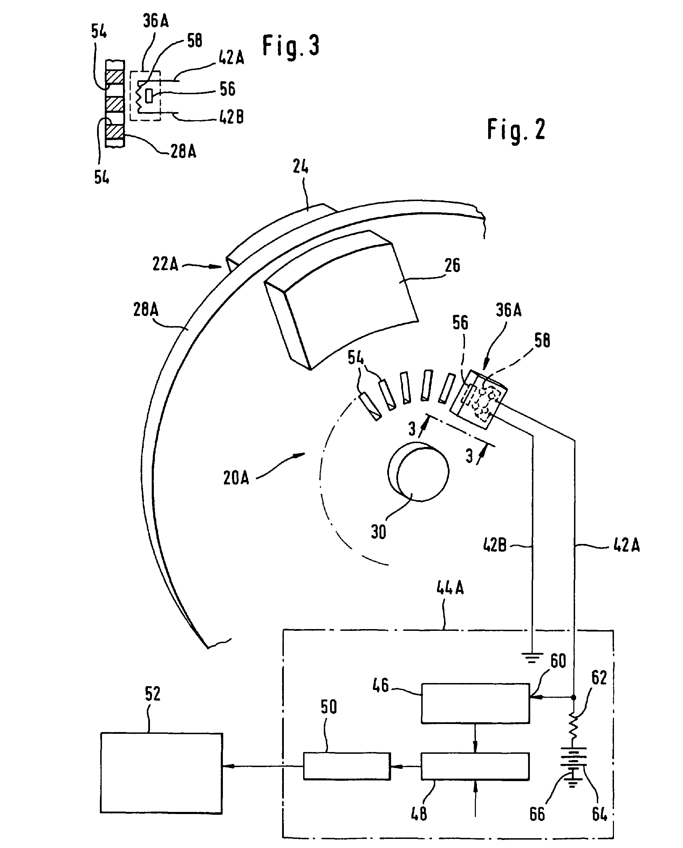

In Figur 2 wird erfindungsgemäß der Effekt der Zähne 34 (Figur 1) erreicht, indem Schlitze 54 in einer Scheibe 28A einer Bremse 22A angebracht werden. Die Bremse 22A enthält die Beläge 24, 26 (oben in Figur 1 beschrieben) zum Ergreifen der Scheibe 28A, wobei letztere durch die Welle 30 mit dem oben erwähnten, nicht gezeigten Rad des Fahrzeugs verbunden ist. Die Schlitze 54 sind voneinander und von der Welle 30 beabstandet, umgeben die Welle 30 und erstrecken sich vorzugsweise von der Achse der Welle 30 aus. Ein Erfassungselement 36A ist entlang einem Kreisweg der Bewegung der Schlitze 54 positioniert, wobei sich die Schlitze 54 bei Drehung des Rads und seiner Scheibe 28A entlang des Wegs um die Welle 30 bewegen.

Das Erfassungselement 36A (Figur 2) ist relativ zu der Drehung der Scheibe 28A feststehend und erfaßt das sich bewegende Muster des Magnetfelds an der Scheibe 28A auf eine zum Erfassen des Magnetfeldmusters durch das Erfassungselement 36 (Figur 1) analoge Weise. In Figur 2 enthält das Erfassungselement 36A einen Permanentmagneten 56, der das Magnetfeld erzeugt. Das Magnetfeld wird durch die Schlitze 54 modulied, um ein sich wiederholendes Feldmuster zu bilden, das sich bei Drehung der Scheibe 28A an dem Erfassungselement 36A vorbeidreht. Das Erfassungselement 36A umfaßt weiterhin eine Anordnung von miteinander verbundenen GMR-Elementen 58A, um einem Signalprozessor 44A über ein Paar Leiter 42A, 42B Ausgangssignale zuzuführen. Die Länge jedes der Leiter 42A, 42B ist um mindestens eine Größenordnung (ein Faktor von 10) größer als die physischen Abmessungen der GMR-Elemente 58 und bei dem üblichen Einbau des Sensors 20A in dem Fahrzeug um mindestens eine Größenordnung größer als die physischen Abmessungen des Erfassungselements 36A.

Unter Bezugnahme auf Figur 3 zeigt die Schnittansicht, wie die durch die Schlitze 54 gebildete geschlitzte Struktur der Scheibe 28A eine zu der gezähnten Struktur des Zahnrads 32 in Figur 1 analoge Konfiguration aufweist. Dadurch liefert die Anordnung der Schlitze von Figur 2 die gleiche Art von sich bewegendem Magnetfeldmuster wie die Zähne 34 von Figur 1. Es wird im Hinblick auf Figuren 2 und 3 ebenfalls angemerkt, daß das Erfassungselement 36A nur aus passiven Elementen aufgebaut ist, einschließlich den GMR-Elementen 58, und keine aktiven Elementen aufweist, wie sie in dem Verstärker 40 von Figur 1 anzutreffen sind. Das Erfassungselement 36A kann deshalb direkt in der heißen Umgebung der Scheibe 28A angeordnet sein, wie in Figur 3 gezeigt neben der Scheibe 28A. Dies vereinfacht den Aufbau der Bremse, da zur thermischen Isolierung eines Felderfassungselements keine zusätzlichen physischen Strukturen erforderlich sind.

Außerdem kann die durch die GMR-Elemente 58 gelieferte relativ hohe Signalstärke die durch die Leiter 42A und 42B gebildete Signalübertragungsleitung mit einem annehmbaren Signal-Rausch-Leistungsverhältnis ansteuern, und dies, ohne daß die durch den Verstärker 40 (Figur 1) gelieferte Verstärkung erforderlich wäre. Dies sorgt für eine Vereinfachung der elektrischen Schaltung, eine Vereinfachung des Aufbaus des Felderfassungselements und die Fähigkeit, das Erfassungselement 36A direkt im Gebiet der hohen Bremshitze zu montieren und gleichzeitig die anderen Schaltungselemente, einschließlich des Signalprozessors 44A, von der heißen Umgebung der Bremse 22A entfernt anzuordnen. Somit sind die Leiter 42A und 42B für eine thermische Isolierung des Signalprozessors 44A von der Bremse 22A lang genug.

In Figur 2 umfaßt der Signalprozessor 44A das Rauschfilter 46, den Komparator 48 und den Triggergenerator 50, die so funktionieren, wie die entsprechenden Elemente von Figur 1 zum Ansteuern des ABS-Rechners 52 zum Steuern der Bremsbeläge 24 und 26. In Figur 2 ist ein Eingangsanschluß 60 des Filters 46 über einen Widerstand 62 mit einem Pol einer Batterie 64 verbunden. Der entgegengesetzte Pol der Batterie 64 ist bei 66 an Masse angeschlossen. Der Leiter 42A von dem Erfassungselement 36A ist mit dem Anschluß 60 verbunden, während der Leiter 42B an Masse angeschlossen ist. Die Batterie 64 liefert Strom zum Betreiben der Anordnung von GMR-Elementen 58. Durch die GMR-Elemente 58 und auch durch den Widerstand 62 fließender Strom liefert am Anschluß 60 eine Signalspannung, die eine Modulation aufweist, die der Modulation des Stroms als Reaktion auf das sich bewegende Magnetfeldmuster entspricht. Das Signal wird dann von dem Filter 46 und den anderen Komponenten des Signalprozessors 44A verarbeitet, um den ABS-Rechner 52 anzusteuern.

Bei Betrieb weist die Anordnung aus GMR-Elementen 58 (GMR = giant magnetoresistor) bei 20°C einen GMR-Effekt von mindestens 6% auf und ist sehr nahe an dem ABS-Zahnradziel bzw. der geschlitzten Scheibe 28A in der aggressiven Umgebung unter dem Fahrzeug und in der Nähe der Bremse 22A angeordnet und wird zum Erzeugen des Magnetfelds von dem Permanentmagneten 56 rückbelastet. Der GMR weist eine ausgezeichnete Stromverstärkung zum Erzeugen des Signals am Anschluß 60 auf. Zusätzliche Verstärkungsschaltungselemente werden nicht verwendet, noch ist sie erforderlich. Die Anordnung von GMR-Elementen 58 ist über den Reihenwiderstand 62 mit der Gleichspannungsquelle der Batterie 64 im Bereich 5 - 24 V verbunden. Durch die sich bewegende Scheibe 28A hervorgerufene Modulationen des Magnetfelds bewirken, daß der Widerstand in dem GMR-Element variiert, was zu einer Spannungsänderung über den festen Reihenwiderstand 62 hinweg resultiert. Diese Spannungsänderung kann durch eine entsprechende Steuerschaltung des Prozessors 44A erfaßt werden. Das GMR-Element weist einen speziellen Widerstand auf, der seinen Widerstandswert in Abhängigkeit von dem Magnetfeld ändert, so daß eine Magnetfeldveränderung ein moduliertes Signal bewirkt, aus dem die Drehzahl (Umdrehungen pro Minute) des Fahrzeugrads erfaßt werden kann.

Das Ausgangssignal des Erfassungselements auf den Leitern 42A, 42B ist eine von dem Prozessor 44A erfaßte Strommodulation einer Konstanzspannungsquelle zur Verwendung durch den ABS-Steuerungsrechner 52. Dies führt im Gegensatz zu der herkömmlichen Dreiaderverbindung, die für aktive Nullgeschwindigkeitssensoren erforderlich sind, zu einer Zweiaderverbindung zu einem Sensor.

## Patentansprüche

1. Antiblockierbremssystem zum Bremsen eines Rads eines Fahrzeugs, umfassend:
eine an dem Rad zur Drehung damit angebrachte Scheibe (28 . A);
Beläge (26), die dahingehend wirken, die Scheibe (28 A) zu ergreifen, um eine Drehung des Rads zu hemmen, wobei ein Ergreifen der Scheibe (28 A) durch die Beläge (24, 26) bei Drehung des Rads in einem Gebiet neben der Scheibe Hitze mit einer hohen Temperatur erzeugt;
eine Drehzahlerfassungseinheit (36 A), die einen Magneten (56) zum Induzieren eines Magnetfelds mit von der Scheibe (28 A) aufgefangenen Feldlinien umfasst, wobei die Scheibe (28 A) in einer Oberfläche der Scheibe (28 A) Diskontinuitäten (54) zum Modulieren eines Musters des Magnetfelds aufweist, wobei sich das Muster während der Drehung des Rads bewegt;
ein Signalverarbeitungsmittel (44 A), das bei einem von der Erfassungseinheit (36 A) ausgegebenen Signal dahingehend arbeitet, eine Drehzahl des Rads zu bestimmen;
einen Antiblockierbremsrechner (52), der auf die von dem Verarbeitungsmittel (44 A) gelieferte Drehzahl reagiert, um die Beläge (24, 26) zum Ergreifen der Scheibe (28 A) zu betreiben;
wobei die Drehzahlerfassungseinheit (36 A) nur passive elektrische Komponenten einschließlich eines Giant-Magnetoresistive-Erfassungselements (58) umfasst, das bei der hohen Temperatur des Gebiets arbeitet, wobei das Giant-Magnetoresistive-Element (58) in dem Bereich angeordnet ist, um das sich bewegende Muster zu überwachen; und das Signalverarbeitungsmittel (44 A) über ein Elektrokabel (42 A, 42 B) an die Erfassungseinheit (36 A) angeschlossen ist, wobei das Kabel (42 A, 42 B) eine ausreichende Länge aufweist, um das Signalverarbeitungsmittel (44 A) in einer Entfernung zu dem Hochtemperaturgebiet zum Arbeiten bei einer relativ niedrigen Temperatur einer Umgebung des Fahrzeugs anzuordnen

## Claims

1. An anti-lock braking system for braking a wheel of a vehicle, comprising:
a disc (28 A) which is attached to the wheel in order to rotate with it;
linings (26) which have the effect of gripping the disc (28 A) in order to impede rotation of the wheel, wherein gripping of the disc (28 A) by the linings (24, 26) when the wheel rotates in a region next to the disc produces heat at a high temperature;
a rotational speed-sensing unit (36 A) which comprises a magnet (56) for inducing a magnetic field with field lines which are intercepted by the disc (28 A), wherein, in a surface of the disc (28 A), the disc (28 A) has discontinuities (54) for modelling a pattern of the magnetic field, wherein the pattern moves during the rotation of the wheel;
a signal-processing means (44 A) which, when a signal is output by the sensing unit (36 A) operates with the effect of determining a rotational speed of the wheel;
an anti-lock braking computer (52) which reacts to the rotational speeds applied by the processing means (44 A) in order to operate the linings (24, 26) in order to grasp the disc (28 A);
wherein the rotational speed-sensing unit (36 A) comprises only passive electrical components including a giant magneto-resistive sensing element (58) which operates at the high temperature of the region, wherein the giant magneto-resistive element (58) is arranged in the area in order to monitor the moving pattern; and the signal-processing means (44 A) is connected to the sensing unit (36 A) via an electric cable (42 A, 42 B), wherein the cable (42 A, 42 B) has a length which is sufficient for the signal processing means (44 A) to be arranged at a distance from the high temperature region in order to operate at a relatively low temperature in the surroundings of the vehicle.

## Revendications

1. Système de freinage à antiblocage destiné au freinage d'une roue de véhicule automobile et comprenant:
un disque rotatif (28 A) monté sur la roue et tournant avec elle;
des garnitures (26), qui ont pour but de serrer le disque (28 A) pour entraver une rotation de la roue, le serrage du disque (28 A) par les garnitures (24, 26) lors de la rotation de la roue produisant, dans une région proche du disque, de la chaleur à une température élevée;
une unité (36 A) pour la détection de la vitesse de rotation, laquelle unité comprend un aimant (56) permettant d'induire un champ magnétique dont les lignes de champ sont absorbées par le disque (28 A), le disque (28 A) ayant, dans une surface extérieure du disque (28 A), des discontinuités (54) destinées à moduler un dessin du champ magnétique, alors que le dessin se déplace pendant la rotation de la roue;
un moyen (44 A) de traitement de signaux, qui a pour fonction, en présence d'un signal émis par l'unité de détection (36 A), de déterminer la vitesse de rotation de la roue;
un ordinateur (52) de freinage à antiblocage, lequel réagit à la vitesse de rotation fournie par le moyen de traitement (44 A), pour amener les garnitures (24, 26) à serrer le disque (28 A);
où l'unité (36 A) pour la détection de la vitesse de rotation ne comprend que des composants électriques passifs, y compris un élément détecteur (58) à tête GMR (Giant magnéto résistive), qui fonctionne à la température élevée de la région, l'élément (58) à tête GMR (Giant magnéto résistive) étant placé dans la région pour surveiller le dessin qui se déplace; et
où le moyen (44 A) de traitement de signaux est raccordé à l'unité (36 A) pour la détection par l'intermédiaire d'un câble électrique (42 A, 42 B), le câble (42 A, 42B) ayant une longueur suffisante pour permettre de placer le moyen (44 A) de traitement de signaux à une certaine distance de la région à haute température pour que ledit moyen fonctionne à une température relativement faible dans l'environnement du véhicule.
